# DEMANDE DE BREVET EUROPEEN

(11) **EP 0 925 725 A1**
(43) Date de publication de la demande: **30.06.1999**
(21) Numéro de dépôt: 97204112.3
(22) Date de dépôt: 24.12.1997
(51) Int. Cl.: A23L 1/227

(54) **Procédé de séchage d'une pâte d'agent aromatisant**

(71) Demandeur: SOCIETE DES PRODUITS NESTLE S.A., 1800 Vevey (CH)
(72) Inventeur: Heyland, Sven, 8534 Weiningen (CH)
(74) Mandataire: Wavre, Claude-Alain

(57) **Abrégé**

Procédé de séchage d'une pâte d'agent aromatisant obtenue par réaction thermique d'un mélange pâteux comprenant au moins une source d'acides aminés libres et au moins un sucre réducteur, dans lequel on ajoute à la pâte de l'amidon à haut point de gélification comme support d'arôme, avant de la sécher.

## Description

La présente invention concerne un procédé de séchage d'une pâte d'agent aromatisant obtenue par réaction thermique d'un mélange pâteux comprenant au moins une source d'acides aminés libres et au moins un sucre réducteur.

Dans de telles pâtes, les arômes sont fixés sur des supports d'arôme, en général des polysaccharides naturels ou synthétiques tels que les amidons natifs, les dextrines ou les fibres végétales. La pâte est ensuite séchée et le gâteau sec final est moulu.
Le brevet EP 0 030 327 décrit un procédé de préparation d'un agent aromatisant dont le support d'arôme est la maltodextrine. Elle est ajoutée à froid après réaction de la pâte et toute l'opération de séchage se déroule sous pression réduite. Lors d'un tel séchage, certaines pâtes d'agent aromatisant peuvent se comporter de manière désavantageuse. Certaines pâtes d'agent aromatisant, sous l'effet de la mise sous vide, ont notamment tendance à gicler et/ou à gonfler.

Une telle expansion peut se produire sous l'effet de gaz qui ne peuvent s'échapper de la pâte devenue hautement visqueuse dans les conditions de séchage. Une telle expansion limite fortement la capacité de séchage de l'étuve puisqu'il est nécessaire de prévoir un étalement sur les plateaux qui prend en compte le volume final du gâteau. Pour certaines pâtes l'étalement n'est que de 5 kg de pâte par m² du plateau.

La présente invention se propose de pallier ces inconvénients.

A cet effet, dans le procédé selon la présente invention, on ajoute à la pâte un amidon à haut point de gélification comme support d'arôme, avant de la sécher.
Pour la sécher, de préférence, on la chauffe à 85-95°C de 20 minutes à 2 heures à pression atmosphérique, et l'on poursuit le chauffage à 70-95°C de 3 à 6 heures sous pression réduite.

On a constaté avec surprise que ce procédé permet bien de pallier les inconvénients de procédés connus tout en ne modifiant aucunement les qualités organoleptiques du produit final obtenu après séchage puis broyage.

Pour mettre en oeuvre le présent procédé, on chauffe un mélange pâteux contenant au moins une source d' acides aminés libres, et au moins un sucre réducteur.

La source d'acides aminés libres est de préférence un hydrolysat de protéines végétales ou animales ou un extrait de levure. Les proportions en acides aminés libres dans le mélange pâteux initial peuvent être comprises entre 2 et 40%. La fraction d'acides aminés libres peut par exemple contenir un seul acide aminé notamment du glutamate, qui peut alors être incorporé au mélange initial dans des proportions relativement élevées, jusqu'à 30% par exemple. La fraction d'acides aminés libres peut également être un mélange d'acides aminés plus complexe résultant de l'hydrolyse acide ou enzymatique d'extraits de micro-organismes notamment de levures ou de protéines végétales issues notamment du soja ou de tourteaux d'oléagineuses telle l'arachide, par exemple. Des acides aminés soufrés sont incorporés au mélange. Ce sont notamment la cystéine, la cystine, la méthionine ou la thiamine. Il est maintenant connu qu'ils améliorent le goût de viande lorsque la réaction de Maillard s'effectue en leur présence.

Le sucre réducteur est de préférence un monosaccharide. Il peut notamment être choisi parmi le xylose, l'arabinose, le fructose et le glucose, utilisés seuls ou en mélange. Il peut être ajouté au mélange à raison de 0,5 à 10%.

Le mélange pâteux peut présenter une teneur en eau de 20 à 40 %, son pH peut être ajusté entre 5 et 7 puis il peut être chauffé de 1 minute à 6 heures à une température de 80 à 150°C. On peut refroidir la pâte obtenue jusque vers 60-70°C, dans une cuve refroidie à l'eau froide, par exemple. On peut alors y ajouter de l'amidon à haut pouvoir de gélification dans des proportions de 3 à 30 % en poids de matière sèche du produit de réaction, par exemple.

L'amidon à haut point de gélification est de préférence de l'amidon de tapioca, de maïs ou de pomme de terre.

La pâte obtenue peut être étendue sur les plateaux d'un séchoir à raison de 7 à 18 kg/ m2, par exemple. Il est ensuit séché de préférence en plusieurs étapes durant lesquelles la température décroît généralement et la pression, en valeur absolue, décroît également.

Dans une première étape, la pâte peut être chauffée à 85-90°C durant 20 minutes à 2 heures, à pression atmosphérique, de manière à gélatiniser l'amidon dans la masse.

Lors d'une deuxième étape du séchage, la pâte gélatinisée peut être maintenue à 70-95°C pendant une durée de 3 à 6 heures sous pression réduite. Cette deuxième étape peut éventuellement être réalisée en plusieurs phases dont la première consiste à chauffer la pâte gélatinisée de 1 à 3 heures à 85-90°C sous une pression absolue de 30-60 mbar, puis 1 à 3 heures à 75-90°C sous une pression absolue de 15 à 30 mbar et une dernière étape de 20 à 90 minutes à 70-80°C sous une pression absolue de 2 à 15 mbar.

Lors de sa mise sous vide, la pâte, préalablement solidifiée pendant la première phase du séchage à pression atmosphérique, ne gicle pas et ne gonfle plus en fin de séchage. Le séchage sous pression réduite peut éventuellement être réalisé en plusieurs étapes et poursuivi jusqu'à obtenir un pourcentage d'humidité dans le gâteau final de 2 à 4%.
Le produit final peut être ensuite broyé et moulu. Il peut être incorporé à toute une gamme de produits alimentaires tels que potage, sauces, condiments etc. Ses qualités organoleptiques et sa densité apparente sont identiques à celle des produits obtenus par un procédé traditionnel de séchage, mais avec des rendements jusqu'à 100% supérieurs à ceux précédemment décrits.

L'utilisation d'un amidon à haut point de gélification dans une telle pâte selon l'invention, présente de nombreux autres avantages comme un coût moindre par rapport à d'autres supports d'arôme tels que les dextrines et permet des conditions de séchage moins contraignantes, autorisant des intervalles de température plus étendus.

L'invention sera mieux comprise à l'aide de l'exemple ci-dessous dans lequel les pourcentages et parties sont indiqués en poids.

### Exemple

On incorpore à une pâte d'hydrolysat de tourteaux d'arachides à 70% de matière sèche, 40% d'acides aminés libres et de pH 6,8, 2% d'inosine monophosphate, 2,7% de chlorhydrate de cystéine, 1,3% de xylose, 0,6% de glucose et 3,4% de graisse de poulet. On brasse énergiquement pendant 10 minutes et on porte ce mélange à une température de 100 °C pendant une durée de 3 heures. On transvase la pâte dans une cuve à double manteau, refroidie à l'eau froide et l'on abaisse la température du mélange à 60-70°C.
On ajoute alors l'amidon de tapioca à raison de 20 % en poids de la matière sèche du produit de réaction. On brasse énergiquement la pâte pendant 10 minutes, puis on l'étale sur les plateaux d'une étuve à raison de 10 kg / m2. La pâte est ensuite séchée sous pression atmosphérique 1 heure et demi à 90 °C puis 1 heure à 90 °C à une pression absolue de 15 mbar. On diminue alors la température du four jusqu'à une valeur de 75 °C et on continue le séchage à une pression absolue de 15 mbar pendant 2 heures. On termine le séchage à 75 °C durant 1 heure sous une pression absolue de 2 ou 3 mbar.
On obtient une pâte séchée peu épaisse et compacte que l'on broie et réduit en poudre. L'agent aromatisant obtenu présente un goût fin avec des qualités organoleptiques excellentes.

## Revendications

1. Procédé de séchage d'une pâte d'agent aromatisant obtenue par réaction thermique d'un mélange pâteux comprenant au moins une source d'acides aminés libres et au moins un sucre réducteur, dans lequel on ajoute à la pâte de l'amidon à haut point de gélification comme support d'arôme, avant de la sécher.

2. Procédé selon la revendication 1 dans lequel, pour sécher la pâte, on la chauffe à 85-95°C de 20 minutes à 2 heures à pression atmosphérique, et l'on poursuit le chauffage à 70-95°C de 3 à 6 heures sous pression réduite.

3. Procédé selon la revendication 1 dans lequel, après une réaction thermique du mélange pâteux de 1 minute à 6 heures à 80-150°C, on refroidit la pâte obtenue à 60-70°C avant de lui ajouter 3 à 30 % en poids d'amidon à haut point de gélification.

4. Procédé selon l'une des revendications 1 ou 2 dans lequel l'amidon à haut point de gélification est de l'amidon de tapioca, de maïs ou de pomme de terre.

5. Procédé selon la revendication 1, dans lequel on poursuit le chauffage sous pression réduite en plusieurs étapes, sous des pressions absolues généralement décroissantes et à des températures généralement décroissantes.

6. Procédé selon la revendication 5, dans lequel on poursuit le chauffage sous pression réduite en une première étape de 1-3 heures à 85-90°C, une deuxième étape de 1-3 heures à 75-90°C sous 15-30 mbar et une troisième étape de 20-90 minutes à 70 à 80°C sous 2 à 15 mbar.

7. Procédé selon les revendications 1 à 5, dans lequel la source d'acides aminés libres est un hydrolysat de protéines végétales ou animales ou un extrait de levure et le sucre réducteur est un monosaccharide.

8. Procédé selon la revendication 1 à 6, dans lequel le mélange pateux présente une teneur en eau de 20 à 40 % et la pâte séchée présente une teneur en eau résiduelle de 2-4%.
